# EUROPÄISCHE PATENTSCHRIFT

(11) **EP 0 600 926 B1**
(45) Veröffentlichungstag und Bekanntmachung des Hinweises auf die Patenterteilung: **18.01.1995**
(21) Anmeldenummer: 92916280.8
(22) Anmeldetag: 24.07.1992
(51) Int. Cl.: G01G 7/06, G01L 1/14

(54) **WÄGEZELLE FÜR EINE ELEKTRONISCHE WAAGE**
WEIGHING CELL FOR AN ELECTRONIC BALANCE
CELLULE DE PESAGE POUR UNE BALANCE ELECTRONIQUE

(30) Priorität: 28.08.1991 DE 4128557
(43) Veröffentlichungstag der Anmeldung: 15.06.1994
(73) Patentinhaber: SOEHNLE-WAAGEN GMBH + CO., 71540 Murrhardt (DE)
(72) Erfinder: STAHL, Albrecht, D-7158 Sulzbach/Murr (DE)
(74) Vertreter: Dreiss, Fuhlendorf, Steimle & Becker, Patentanwälte
(86) Internationale Anmeldenummer: EP9201693
(87) Internationale Veröffentlichungsnummer: WO9305370

(56) Entgegenhaltungen:
- EP-A- 0 017 581
- EP-A- 0 302 396
- FR-A- 2 443 054
- GB-A- 1 371 835
- GB-A- 2 047 410

## Beschreibung

Die Erfindung betrifft eine Wägezelle für eine elektronische Waage mit zwei sich gewichtsabhängig parallel zueinander verschiebenden Seitenwänden an denen zwei Platten angeordnet sind, die einen Kondensator mit sich gewichtsabhängig ändernder Kapazität bilden.

Derartige Wägezellen sind aus der DE 29 14 449 C2 bekannt.

Aufgabe der Erfindung ist es, eine deartige Wägezelle noch kompakter und einfacher auszugestalten, insbesondere in der Hinsicht, daß die Waage insgesamt, d.h. einschl. der zugehörigen Elektronik, noch kleiner und einfacher gebaut werden kann.

Aus der DE 29 48 165 Al ist ein kapazitiver Wandler bekannt. Er besteht aus einem starren Membrankörper mit einer darüber angeordneten verschiebbaren Platte. Innerhalb des starren Membrankörpers ist ein beweglicher Membranteil vorgesehen, der durch Druck in einem Druckraum ausgelenkt wird. Er trägt über Abstandswülste die Platte, so daß dann, wenn der Druckraum mit Druck beaufschlagt wird, der flexible Membranteil ausgelenkt wird. Auf dem flexiblen Membranteil sind flächige Bereiche aus leitendem Material aufgedampft. Ebenso sind auf der Platte flächige Bereiche aufgedampft. Sie bilden jeweils ein äußeres und ein inneres Elektrodenpaar, die ihre Kapazität bei Auslenkung des Membranteiles unterschiedlich verändern. Aus dieser Veränderung wird bei Druckbeaufschlagung des Druckraums ein Ausgangssignal abgeleitet. Der nicht auslenkbare Teil des Membrankörpers trägt auf einer Verlängerung elektrische Schaltelemente. Nachteilig an dieser Anordnung ist ihr komplizierter Aufbau, sowie die Tatsache, daß innerhalb eines starren und unverschiebbar angeordneten Membrankörpers ein flexibler Membranteil angeordnet werden muß, der mit unterschiedlichen Flächenbereichen bedampft werden soll. Außerdem ist die Übertragung dieser Anordnung auf andere Anordnungen sehr schwierig, da bei der DE 29 48 165 der Druckraum sorgfältig abgedichtet werden muß. Auch gegenüber dieser Anordnung besteht das Ziel der Erfindung darin, eine erheblich vereinfachte und volumenmäßig kompaktere Einheit von Wägezelle und Auswerteelektronik zu schaffen.

Erfindungsgemäß wird diese Aufgabe dadurch gelöst, daß bei einer Wägezelle mit zwei sich gewichtsabhängig parallel zueinander verschiebenden Seitenwänden, an denen zwei Platten angeordnet sind, die einen Kondensator mit sich gewichtsabhängig ändernder Kapazität bilden, vorgesehen ist, daß eine Platte eine Leiterplatte ist, die auf der der anderen Platte zugewandten Seite mit einer Metallschicht versehen ist, und die ferner die Bauelemente der elektrischen Schaltung einer elektronischen Waage trägt.

Bei der Erfindung kann nun also eine Platte des Kondensators bereits als Leiterplatte eingesetzt werden, die die Bauelemente der Auswerte- und Anzeigeschaltung trägt. Damit wird sehr viel Raum gespart. Im Gegensatz zu der bekannten Anordnung, ist diese Platte aber nicht starr angeordnet, sondern vielmehr Teil der beweglichen Kondensatoranordnung. Die Platte ist nicht, wie beim Stand der Technik, mit einem flexiblen Membranteil zu versehen, sondern in sich starr, aber beweglich.

Ein Ausführungsbeispiel der Erfindung und ihrer vorteilhaften Weiterbildungen werden im folgenden beschrieben. Es stellen dar:
- Figur 1: ein Ausführungsbeispiel;
- Figur 2: eine Draufsicht in Richtung der Pfeile II-II in Figur 1.

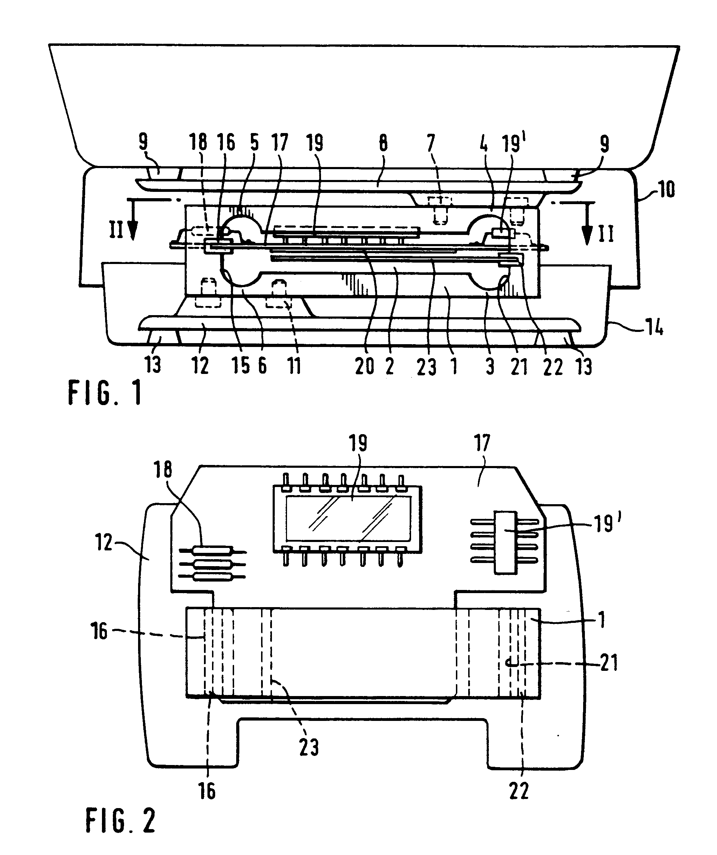

Die Wägezelle 1 besteht aus einem in der Draufsicht (Fig. 2) rechteckigen und im Querschnitt mit einer Ausnehmung 2 versehenen metallischen Block. Die Ausnehmung 2 (vgl. Fig. 1) hat die Form eines Schlitzes, der sich an seinen beiden Enden erweitert, so daß vier Bereiche 3,4,5,6 mit verringertem Materialquerschnitt entstehen, die sich bei Belastung der Wägezelle 1 wie Gelenke eines Parallellenkers verhalten. Auf der Oberseite der Wägezelle 1 sitzt, mit Schrauben 7 verschraubt, eine Platte 8, die mittels Stützen 9 den Oberteil 10 der Waage mit einer Schale trägt, in die beim Wiegen das zu wiegende Gut aufgesetzt wird. Die Unterseite der Wägezelle 1 ist mittels Schrauben 11 mit einer Platte 12 verbunden. Diese sitzt über Stützen 13 auf dem Unterteil 14 der Waage auf.

In der linken Wand 15 der Ausnehmung 2 der Wägezelle 1 sitzt - in einem Isolierblock 16 gehalten - eine Leiterplatte 17, deren Oberseite mit den Bausteinen der elektrischen Schaltung der Waage, z.B. Widerständen 18 und den ICs 19,19′ bestückt ist. Die Unterseite der Leiterplatte 17 ist in dem Bereich, in dem sie sich innerhalb der Ausnehmung 2 befindet, mit einer Metallschicht 20 versehen.

In der rechten Wand 21 der Ausnehmung 2 ist, mittels eines Isolierblockes 22 eine weitere Metallplatte 23 gehalten. Sie bildet mit der Metallschicht 20 auf der Leiterplatte 17 einen Kondensator, der Bestandteil einer Oszillatorschaltung der Waage ist. Die Oszillationsschaltung ist u.a. mittels der Bauelemente auf der Leiterplatte 17 aufgebaut.

Bei Belastung der Waage verhält sich die Wägezelle - wie bereits erwähnt - wie ein Parallellenker mit der Folge, daß sich der (in Fig. 1) rechte Teil der Wägezelle gegenüber dem linken Teil derselben absenkt, so daß sich damit der Abstand zwischen der Metallschicht 20 auf der Unterseite der Leiterplatte 17 einerseits und der Metallplatte 23 andererseits vergrößert und sich somit die Kapazität des Kondensators, der durch beide gebildet wird, gewichtsabhängig verändert.

Gegenüber bekannten Konstruktionen zeichnet sich die beschriebene Waage dadurch aus, daß eine der beiden Platten, die den gewichtsabhängig veränderbaren Kondensator bilden, durch die Leiterplatte 17 gebildet wird, die auf ihrer der anderen Metallplatte
- nämlich der Metallplatte 23 - zugewandten Seite zur Bildung des Kondensators mit einer Metallschicht 20 versehen ist. Die Leiterplatte 17 ist aber wesentlich größer ausgebildet als der Bereich, mit dem sie innerhalb der Ausnehmung 2 der Wägezelle 1 zur Bildung des Kondensators beiträgt. Mit dem sich außerhalb der Ausnehmung 2 erstreckenden Bereich, der aus Figur 2 ersichtlich ist, dient die Leiterplatte 17 zur Aufnahme der elektrischen Bauelemente der Auswerte- und Anzeigeschaltung der Waage.

## Patentansprüche

1. Wägezelle für eine elektronische Waage mit zwei sich gewichtsabhängig parallel zueinander verschiebenden Seitenwänden (15,21) an denen zwei Platten angeordnet sind, die einen Kondensator mit sich gewichtsabhängig ändernder Kapazität bilden, **dadurch gekennzeichnet,** daß eine Platte eine Leiterplatte (17) ist, deren der anderen Platte (23) zugewandte Seite mit einer Metallschicht (20) versehen ist und die ferner die Bauelemente (18,19,19′) der elektrischen Schaltung einer elektronischen Waage trägt.

## Claims

1. Weighing cell for an electronic balance with two side walls moving parallel to another, on which two plates are arranged, constituting a capacitor with weight dependant varying capacity **characterised in** that one plate is a printed circuit, with its side facing the other plate beeing provided with a metal layer and further supporting the electric circuit of one electronic balance.

## Revendications

1. Cellule de pesage pour une balance électronique avec deux parois latérales (15, 21) se deplaçant parallèlement l'une à l'autre, sur lesquelles deux plaques ont été rapportées, qui forment un condensateur dont la capacité varie en fonction du poids, **caractérisée en ce** qu'une des plaques est un circuit imprimé, dont le côté situé en regard de l'autre plaque est pourvu d'une couche métallique, et qui supporte de plus les composants du circuit électrique d'une balance électronique.
